# EUROPEAN PATENT APPLICATION

(11) **EP 1 595 735 A2**
(43) Date of publication of application: **16.11.2005**
(21) Application number: 04076384.9
(22) Date of filing: 11.05.2004
(51) Int. Cl.: B60L 13/06

(54) **Inertial measurement unit based levitation control**

(71) Applicant: Lockheed Martin Corporation, Orlando, Florida 32819-8907 (US)
(72) Inventor: Hughes, John G., Casselberry Florida 32707 (US)
(74) Representative: Kupecz, Arpad

(57) **Abstract**

An apparatus and method for control of attractive magnetic levitation comprising operating an inertial measurement unit and employing output of the inertial measurement unit as a primary feedback of a control loop.

## Description

### CROSS-REFERENCE TO RELATED APPLICATIONS

This application claims the benefit of the filing of U.S. Provisional Patent Application Serial No. 60/468,698, entitled "Inertial Measurement Unit Based Levitation Control", filed on May 6, 2003, and the specification thereof is incorporated herein by reference.

### STATEMENT REGARDING FEDERALLY SPONSORED RESEARCH OR DEVELOPMENT

Not Applicable.

### INCORPORATION BY REFERENCE OF MATERIAL SUBMITTED ON A COMPACT DISC

Not Applicable.

### COPYRIGHTED MATERIAL

Not Applicable.

### BACKGROUND OF THE INVENTION

### Field of the Invention (Technical Field):

The present invention relates to levitation control for magnetic levitation devices, particularly trains.

### Background Art:

Attractive magnetic levitation is sensitive to structural modes in the elevated guideway of magnetically levitated trains. The inertial measurement unit ("IMU") based levitation control system and method of the invention eliminates this sensitivity.

There have been two historical approaches to solving the problem of guideway modes being coupled in the control loop. The first is to make the guideway very stiff. This attempts to get the modes high enough in frequency that they are not an issue for levitation control. The other approach is to add secondary suspension to the lift magnets of the magnetic levitation system. The secondary suspension attempts to isolate the car from the guideway. The inertial ratio between the magnet assemblies and the guideway are great enough that the guideway looks like earth to the gap controller.

In the first approach, making a very stiff guideway is very expensive. In the second approach, the secondary suspension systems for each lift magnet are also quite expensive. The IMU based approach of the invention eliminates the requirement for a very stiff guideway as well as the secondary suspension.

### BRIEF SUMMARY OF THE INVENTION

The present invention is of an apparatus and method for control of attractive magnetic levitation, comprising: operating an inertial measurement unit; and employing output of the inertial measurement unit as a primary feedback of a control loop. In the preferred embodiment, inertial measurement unit drift is eliminated, most preferably by operating a gap measurement loop at a bandwidth substantially lower than a primary loop of the control loop. Guideway structural modes are decoupled from the control loop. Outputs of the inertial measurement unit to the control loop comprise delta roll angle, delta pitch angle, delta yaw angle, height acceleration, propulsive acceleration, and lateral acceleration.

Objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

### BRIEF DESCRIPTION OF THE SEVERAL VIEWS OF THE DRAWINGS

The accompanying drawings, which are incorporated into and form a part of the specification, illustrate one or more embodiments of the present invention and, together with the description, serve to explain the principles of the invention. The drawings are only for the purpose of illustrating one or more preferred embodiments of the invention and are not to be construed as limiting the invention. In the drawings:
Figs. 1-2 are block diagrams of the preferred control apparatus for the invention and also useful in performing a Matrixx/Matlab simulation of the invention; and

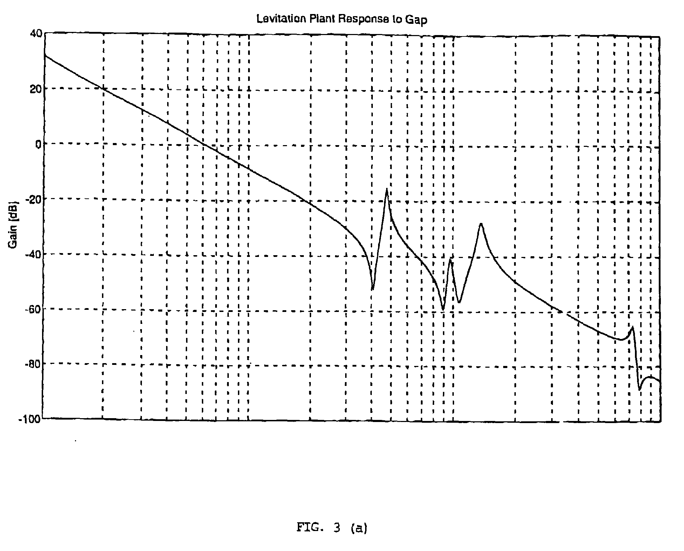

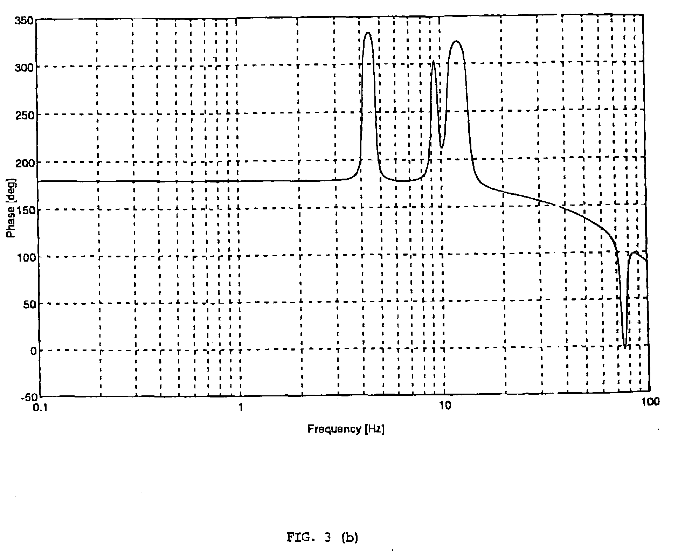

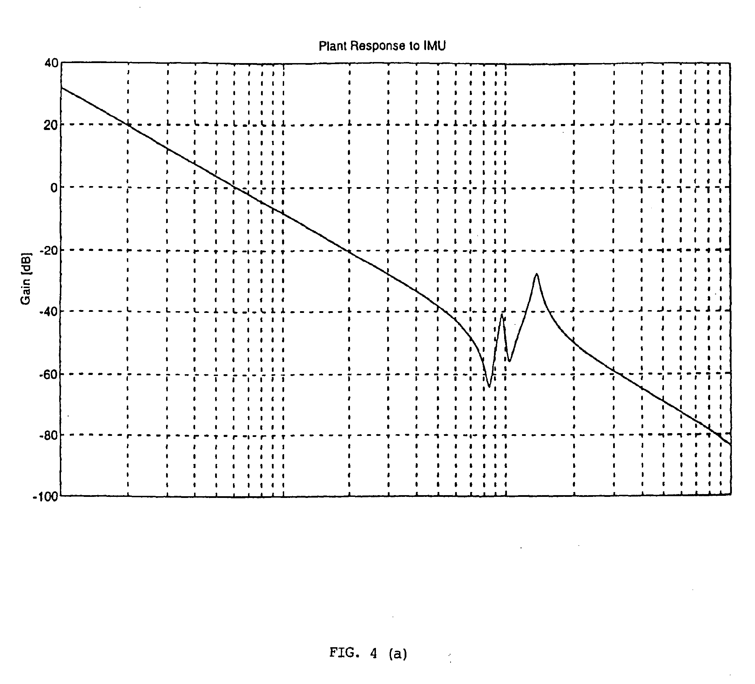

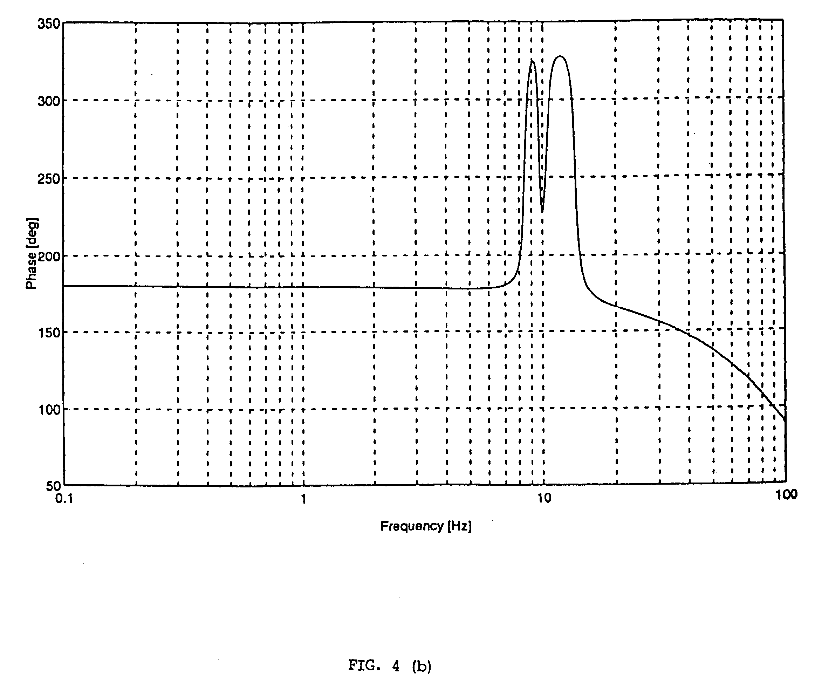

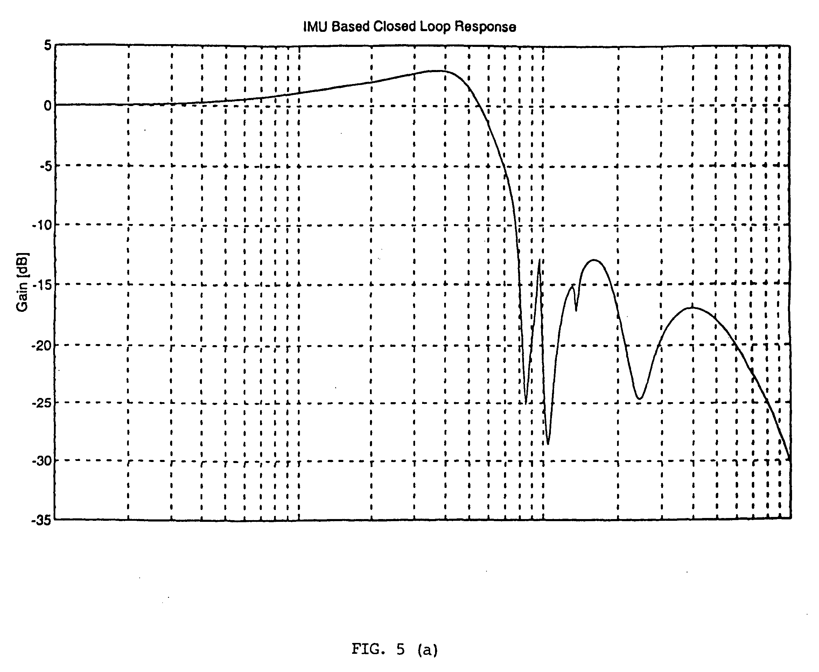

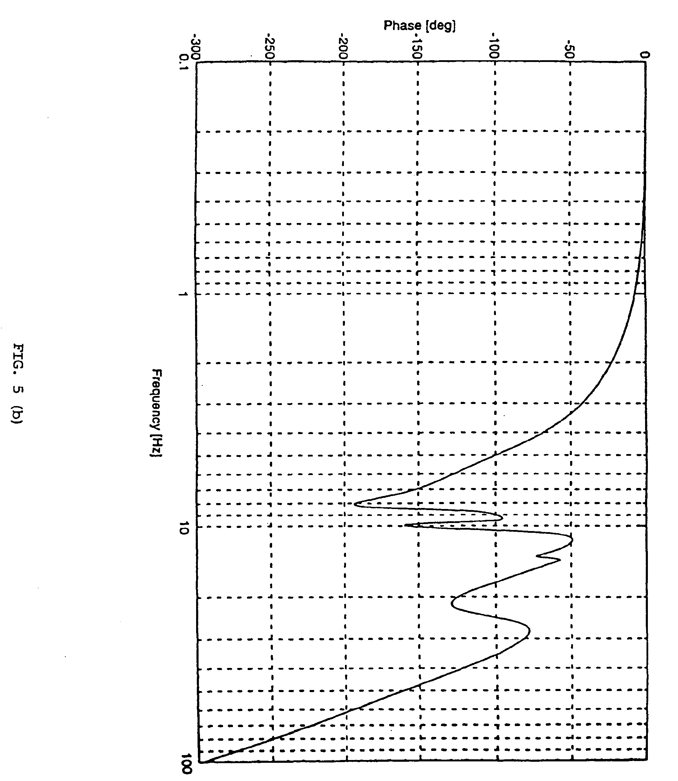

Figs. 3-5 present simulation results for the apparatus of Figs. 1-2.

### DETAILED DESCRIPTION OF THE INVENTION

All present attractive magnetic levitation systems use gap control as the primary method of levitation control. Since gap is relative to guideway, guideway modes have strong coupling in the control loop of such systems and are thus a source of instability. The inertial measurement unit ("IMU") based levitation of the present invention is relative to the inertial frame. Thus, with the present invention, guideway modes no longer couple in the control loop.

The primary means of levitation control throughout the industry is gap control. This causes coupling between the levitation control and guideway modes. IMU based levitation control eliminates this coupling and allows far less expensive guideway construction.

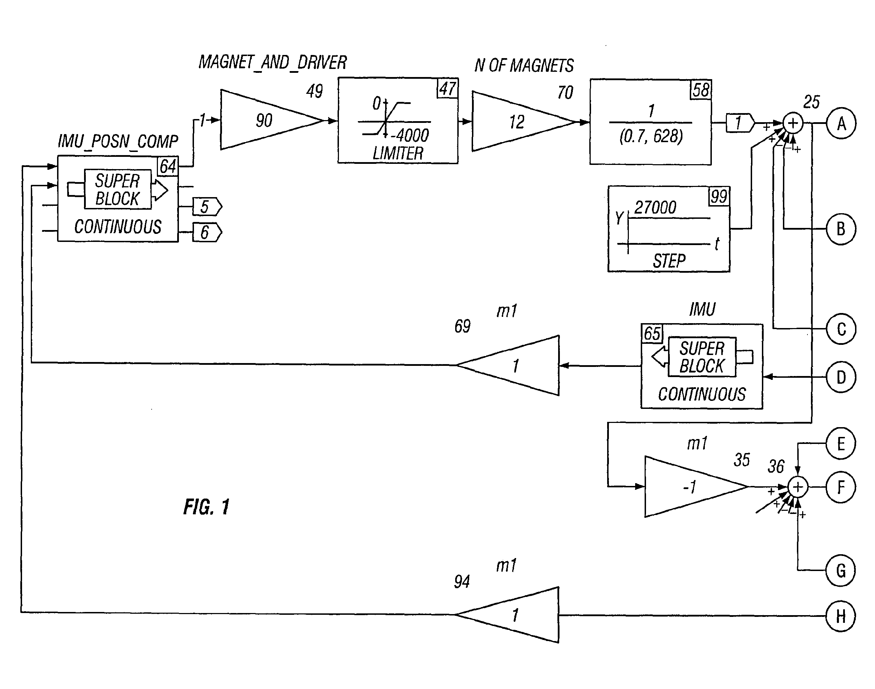

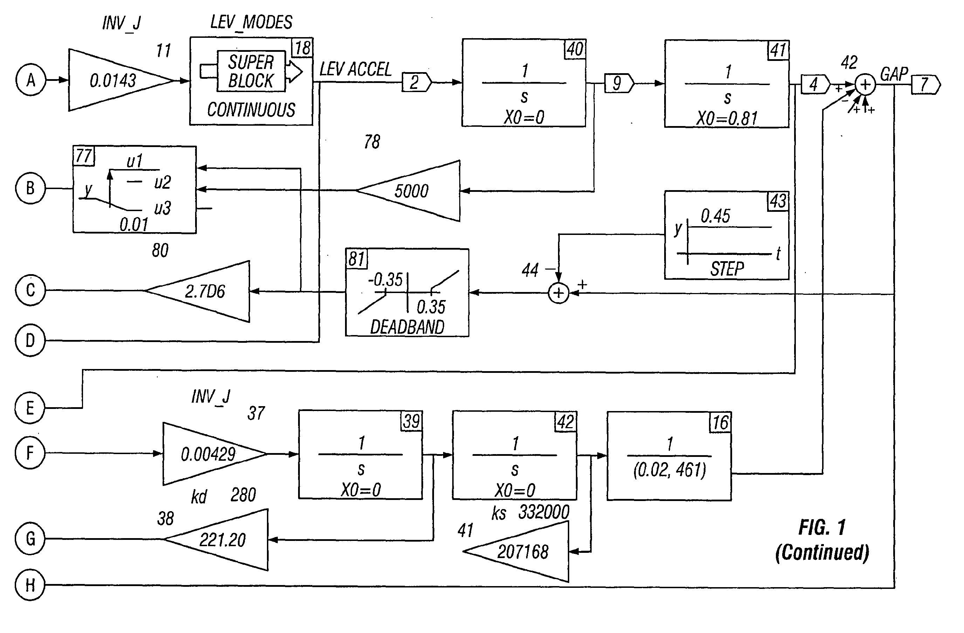

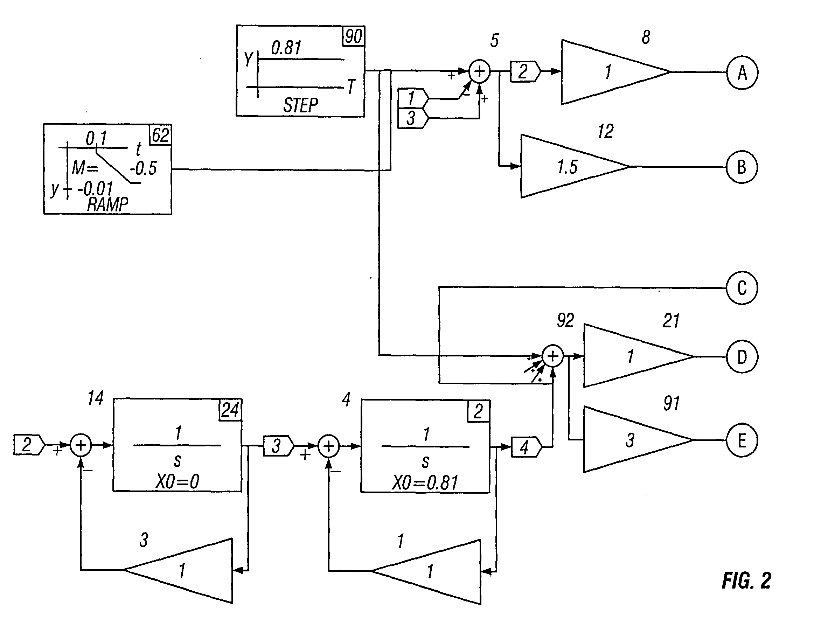

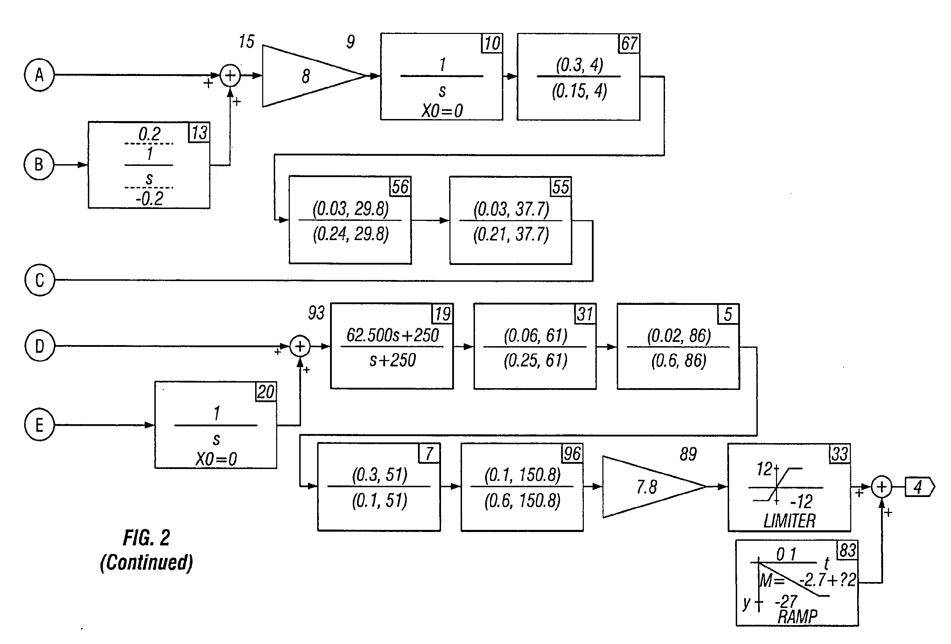

Instead of gap, with the present invention an Inertial Measurement Unit (IMU) becomes the primary feedback, decoupling guideway modes from the levitation control. The IMU eliminates coupling to guideway modes. Since drift must be a concern, in the preferred embodiment an outer low bandwidth gap loop is closed to eliminate IMU drift, much as GPS updates eliminate drift in internal navigation systems in aircraft. Figs. 1 and 2 present the preferred controlled apparatus using this approach.

Figs. 1 and 2 show functional block diagrams of the preferred electronics of the invention useful in conjunction with an IMU, with Fig. 2 showing the details of the IMU_Posn_Comp block of Fig. 1. Figs. 1 and 2 are also useful in performing a Matrixx/Matlab simulation of the invention, permitting one of ordinary skill in the art to verify its utility as described and claimed.

To reiterate, in magnetically levitated systems, both levitation and propulsion must be controlled. Propulsion is a single degree of freedom and its control is straightforward. Levitation, however, is a five degree of freedom problem. In levitation control, the magnetic gap (vehicle height), pitch, roll, yaw and lateral position must all be simultaneously controlled. In levitation control, low frequency guideway modes can cause stability problems. Use of the IMU as the primary feedback eliminates the coupling of the guideway modes, thus eliminating the stability problems. While all five degrees of freedom take advantage of the IMU based feedback, only levitation height is discussed. The solution is similar for the other four degrees of freedom associated with levitation.

In Fig. 1, the preferred levitation height control system is illustrated. This includes the levitation height controller compensation (IMU_POSN_COMP), magnets and magnets drivers, vehicle and vehicle dynamics, guideway with guideway dynamics and IMU. Details of the levitation height controller are provided in Fig. 2. In Fig. 1, blocks 49, 47, 70, and 58 comprise a simplified magnet and magnet driver force controller. Block 25 is the vehicle lift force summing junction. Block 99 is simply the vehicle weight. The output of Block 25 is the net lift force applied to the vehicle. Block 11 is the inverse of vehicle inertia. Its output is vehicle lift acceleration for a rigid body. Block 18 is the vehicle dynamics. Its output is vehicle acceleration. Block 40 integrates the vehicle acceleration. Its output is vehicle rate. Block 41 integrates the vehicle lift rate. Its output is vehicle inertial vertical position. Blocks 43, 44, 77, 78, 80 and 81 are used to generate forces involved if the vehicle is in contact with the guideway. The guideway is modeled by blocks 36, 37, 49, 42, 16, 41 and 38. The output of block 16 is the guideway inertial position. The output of block 42 is the difference between the vehicle and guideway inertial positions, the magnetic gap. Block 65 is the IMU. Its output is the vehicle inertial acceleration. The IMU output is the inertial feedback and block 42 output is the gap measurement. These are the two feedbacks provided to the levitation height controller, IMU_POSN_COMP. A high bandwidth (approximately 5 Hz) inertial position loop is closed using the IMU as the feedback. Guideway modes are not coupled to the IMU. A low bandwidth (less than 1 Hz) gap loop is closed around the inertial loop eliminating IMU drift and allowing the vehicle to follow the changes in height in the guideway.

Figure 2 comprises lift force generation, IMU loop closure, gap loop closure and gap command generation. The IMU output (lift acceleration) is input 2. Blocks 14, 24, and 3 make up a low pass filter. The output of block 24 is the inertial lift rate estimate. Blocks 4, 2, and one comprise another low pass filter. The output of Block 2 is the lift inertial position estimate. Block 92 is the summing junction for the inertial height loop. Blocks 21, 91, 20 and 93 comprise a proportional plus integral ("P+I") compensator. Bloch 19 is a lead lag filter. Blocks 31, 5, 7, and 96 are structural filters for the vehicle dynamics. Block 89 sets the loop gain. Block 83 ramps the lift force up to just below vehicle weight. The crossover frequency for the inertial height control is approximately 5 Hz. The gap loop is closed in the upper half of Fig. 2. Blocks 90 and 62 are used to provide the gap command. The initial magnetic gap is 0.81" with the vehicle resting on its skids down on the track. Following near lift force generation by block 83, block 62 generates the gap command. Blocks 8, 12, 13, and 15 comprise the P+I compensator for the gap loop. Blocks 10 and 67 provide the gap control loop with high low frequency gain. Blocks 56 and 55 are structural filters for the guideway modes.

To summarize, a high bandwidth levitation height loop is preferably closed using the IMU. This loop is completely decoupled from guideway modes. This loop provides disturbance rejection from wind gusts and high frequency track irregularities. A low bandwidth gap loop is closed around the IMU. This loop eliminates IMU drift and enables the vehicle to track the low frequency (e.g., grade changes) variations in the height of the guideway.

The IMU preferably provides six degree of freedom information. Its angular outputs are preferably delta roll angle, delta pitch angle, and delta yaw angle. Very fine resolution angular data are preferably updated at 3600 Hz in the present invention. Lower frequency updates are acceptable. The linear outputs are preferably height acceleration, propulsive acceleration, and lateral acceleration. In the present invention, fine resolution acceleration data are preferably updated at 300 Hz.

Although the invention has been described in detail with particular reference to these preferred embodiments, other embodiments can achieve the same results. Variations and modifications of the present invention will be obvious to those skilled in the art and it is intended to cover all such modifications and equivalents.

## Claims

1. An apparatus for control of attractive magnetic levitation, said apparatus comprising:
an inertial measurement unit; and
a control loop employing output of said inertial measurement unit as a primary feedback of said control loop.

2. The apparatus of claim 1 wherein said control loop additionally comprises means for elimination of inertial measurement unit drift.

3. The apparatus of claim 2 wherein said means comprises a gap measurement loop operating at a bandwidth substantially lower than a primary loop of said control loop.

4. The apparatus of claim 1 wherein guideway structural modes are decoupled from said control loop.

5. The apparatus of claim 1 wherein outputs of said inertial measurement unit to said control loop comprise delta roll angle, delta pitch angle, delta yaw angle, height acceleration, propulsive acceleration, and lateral acceleration.

6. A method for control of attractive magnetic levitation, the method comprising the steps of:
operating an inertial measurement unit; and
employing output of the inertial measurement unit as a primary feedback of a control loop.

7. The method of claim 6 wherein the employing step additionally comprises the step of eliminating inertial measurement unit drift.

8. The method of claim 7 wherein the eliminating step comprises operating a gap measurement loop at a bandwidth substantially lower than a primary loop of the control loop.

9. The method of claim 6 wherein guideway structural modes are decoupled from the control loop.

10. The method of claim 6 wherein outputs of the inertial measurement unit to the control loop comprise delta roll angle, delta pitch angle, delta yaw angle, height acceleration, propulsive acceleration, and lateral acceleration.
